**Europäisches Patentamt**

**European Patent Office**

**Office européen des brevets**

(11) Numéro de publication : **0 368 723 B1**

## (12) FASCICULE DE BREVET EUROPEEN

(45) Date de publication du fascicule du brevet :
**20.05.92 Bulletin 92/21**

(51) Int. Cl.⁵ : **F16B 5/04, F16B 13/08**

(21) Numéro de dépôt : **89403002.2**

(22) Date de dépôt : **31.10.89**

(54) **Dispositif d'attache de deux elements.**

(30) Priorité : **08.11.88 FR 8814545**
**24.01.89 FR 8900782**

(43) Date de publication de la demande :
**16.05.90 Bulletin 90/20**

(45) Mention de la délivrance du brevet :
**20.05.92 Bulletin 92/21**

(84) Etats contractants désignés :
**DE ES GB IT**

(56) Documents cités :
**DE-A- 3 427 640**
**GB-A- 1 287 818**
**US-A- 2 758 498**
**US-A- 3 722 037**
**US-A- 4 657 461**

(73) Titulaire : **REGIE NATIONALE DES USINES**
**RENAULT**
**Boîte postale 103 8-10 avenue Emile Zola**
**F-92109 Boulogne-Billancourt (FR)**

(72) Inventeur : **Lagrange, Jacques**
**6, Allée de la Cascade**
**F-92500 Rueil-Malmaison (FR)**

(74) Mandataire : **Ernst-Schonberg, Michel et al**
**REGIE NATIONALE DES USINES RENAULT (S.**
**0267) 8 & 10, avenue Emile Zola**
**F-92109 Boulogne Billancourt Cédex (FR)**

EP 0 368 723 B1

## Description

La présente invention se rapporte à un dispositif d'attache de deux éléments.

On connaît des types d'assemblage de deux éléments qui sont assurés par des rivets du type "POP".

Ces rivets sont métalliques et ont l'inconvénient d'avoir des problèmes de corrosion. On connaît aussi des rivets en plastique. Ces derniers ne garantissent pas un bon assemblage dans le temps car il y a fluage de la matière. De plus, le maintien n'est pas très élevé du fait de la faible surface d'application de l'effort de blocage.

Par la publication US-A-4.657.461, on connaît un dispositif de fixation d'objets contre une paroi présentant un orifice. Ce dispositif est constitué d'un boulon fileté, à l'extrémité duquel est monté un bras pivotant. Le bras pivotant, après avoir été introduit en position rabattue contre le boulon au travers de l'orifice ménagé dans la paroi, permet de retenir fermement, en position dégagée, le boulon et les objets fixés sur celui-ci.

Le but de la présente invention est de proposer un dispositif d'assemblage de deux éléments, qui soit insensible à la corrosion et qui garantisse un blocage efficace dans le temps.

L'invention concerne un dispositif d'attache de deux éléments comportant l'un et l'autre un trou de passage qui est aligné avec l'autre. Ce dispositif est caractérisé en ce qu'il comporte d'une part un pion constitué d'une tête et d'un axe muni d'au moins deux ailes de maintien qui s'articulent sur une collerette de façon à pouvoir s'ouvrir autour de celle-ci contre la face extérieure du second élément après l'introduction et le passage de la tête au travers du premier puis du second trou, et son dépassement à l'extérieur du second trou, et d'autre part une entretoise d'appui coopérant avec le pion en pénétrant dans un premier temps dans l'axe puis en s'introduisant dans le trou de l'élément (1) pour venir bloquer l'ensemble au moyen d'une extrémité de fermeture sur l'axe.

Selon un mode de réalisation de l'invention, les collerettes ont une face de blocage qui coopère avec une forme conjuguée de l'extrémité interne de chaque aile de maintien. Chaque aile de maintien a une lame élastique perpendiculaire à sa face interne. Cette lame est rabattue en contrainte vers l'axe lors de l'introduction et du passage de la tête dans les trous, puis libérée après le dépassement de la tête à l'extérieur du trou, de façon à pouvoir se placer parallèlement à l'axe et à se centrer dans ce trou au moyen d'un blocage extérieur.

Selon un mode de réalisation de l'invention, l'axe est muni de crans et l'entretoise d'appui présente au moins un ensemble de deux crans disposés face à face, dans celle-ci et coopérant avec les crans de l'axe.

La présente invention présente ainsi l'avantage d'offrir un dispositif d'attache de deux éléments, qui permet un montage rapide qui est insensible à la corrosion avec un bon maintien qui reste efficace dans le temps.

Le dispositif d'attache de deux éléments selon l'invention présente ainsi l'avantage de faciliter le montage du pion et de garantir le blocage de l'entretoise d'appui.

D'autres caractéristiques et avantages de la présente invention ressortiront de la description qui suit le mode de réalisation donné à titre d'exemple en référence aux dessins annexés sur lesquels :
 – la figure 1 est une vue de l'ensemble du dispositif d'attache selon l'invention,
 – la figure 2 est une vue de l'ensemble du dispositif correspondant à la figure 1, après l'assemblage des deux éléments et avec l'entretoise d'appui en coupe,
 – la figure 3 est une coupe selon 3 de la figure 2.

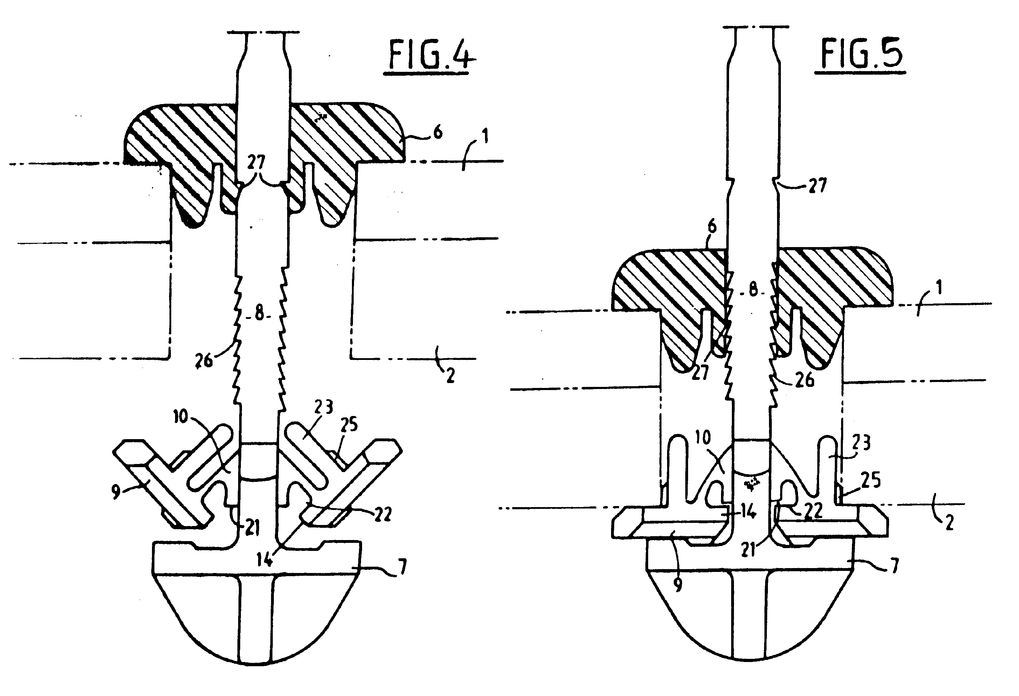

 – la figure 4 est une vue de l'ensemble du dispositif d'attache selon l'invention,
 – la figure 5 est une vue de l'ensemble du dispositif correspondant à la figure 4, après assemblage des deux éléments et avec l'entretoise d'appui en coupe.

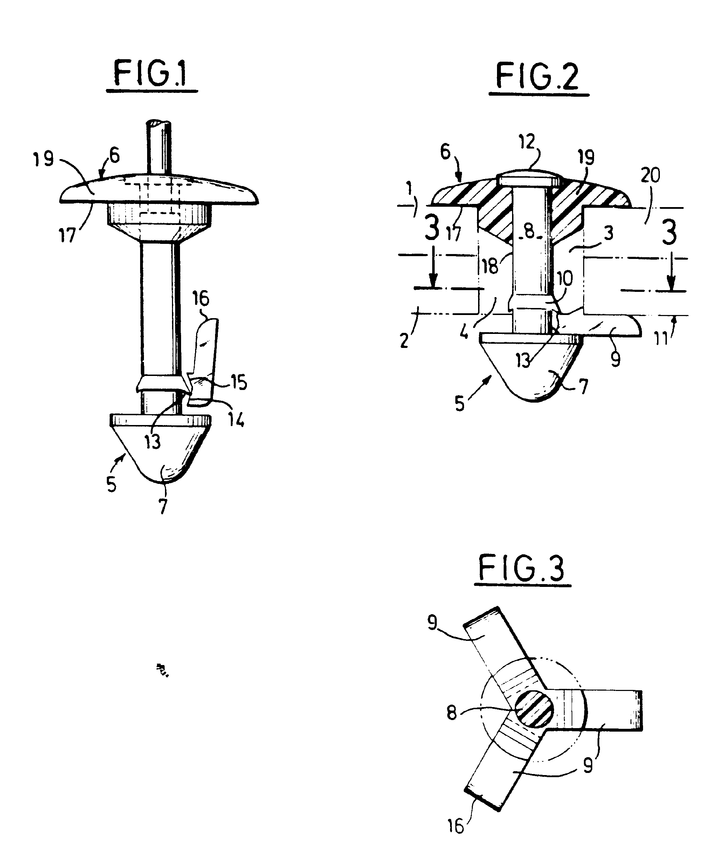

Le dispositif d'attache, selon l'invention, relie deux éléments 1 et 2, l'élément, l'élément 1 étant au-dessus de l'élément 2 sur la figure 2. L'élément 1 comporte un trou 3, qui est aligné avec un trou 4 appartenant à l'élément 2.

Le dispositif d'attache est constitué par un pion 5 qui coopère avec une entretoise d'appui 6. Le pion 5 comporte un axe 8 qui se termine par une tête 7. L'axe 8 est équipé de 3 ailes 9 de maintien qui s'articulent sur une collerette 10 aménagée sur ledit axe 8.

La tête 7 a une forme tronconique avec une extrémité arrondie de façon à faciliter son introduction dans les trous 3 et 4.

La collerette 10 a une face de blocage 13 qui fait un angle aigu par rapport à l'axe 8. Cette face de blocage 13 coopère avec la forme conjuguée de l'extrémité interne de chaque aile 9 de maintien, qui s'appui sur elle.

Chaque aile 9 de maintien possède une protubérance 15 qui a une face extérieure en forme d'arc de cercle, dont le diamètre est légèrement plus faible que le diamètre des trous 3 ou 4, de manière à pouvoir venir se centrer dans le trou 4 de l'élément 2.

De plus, chaque aile de maintien a un arrondi 16 sur son extrémité externe afin de faciliter le glissement de l'aile 9 de maintien contre la face inférieure 11 de l'élément 2 lors de l'ouverture de ladite aile 9 de maintien.

L'entretoise 6 a une forme tronconique afin de permettre l'introduction et l'autocentrage dans le trou 3 de l'élément 1 correspondant. Cette forme tronconique est prolongée par une forme cylindrique d'un diamètre légèrement inférieure au diamètre des trous 3 ou 4.

Le pion 5 est introduit successivement dans les trous 3 et 4 de manière que la tête 7 traverse et dépasse lesdits trous jusqu'à ce que les ailes 9 de maintien s'ouvrent autour de la collerette 10 pour venir s'appliquer contre la face inférieure 11 de l'élément 2.

L'entretoise d'appui 6 est rentrée, dans un premier temps, dans l'axe 8, au moyen de son trou 18 puis, dans un deuxième temps, elle est introduite dans le trou 3 de l'élément 1 au moyen de sa forme tronconique, de manière que la forme cylindrique, qui la prolonge, vienne s'ajuster dans ledit trou 3.

L'entretoise d'appui 6 vient se bloquer par l'intermédiaire de sa face 17 de sa base 19, contre la face supérieure 20 de l'élément 1.

L'entretoise d'appui 6 est bloquée par une extrémité de fermeture 12 réalisée sur l'axe 8.

Dans le cas représenté sur les figures, l'extrémité de fermeture 12 est obtenue par évasement de l'axe 8 au moyen d'un outillage approprié.

Dans une variante de réalisation non représentée sur les figures, l'extrémité de fermeture 12 est constituée par une rondelle comportant une empreinte de blocage sur l'axe 8.

La collerette 10 aménagée sur l'axe 8 se prolonge le long dudit axe 8 et a une face de blocage 21 qui est disposée autour de l'axe 8 et perpendiculairement à celui-ci. Cette face de blocage 21 coopère avec une forme conjuguée 22 de l'extrémité interne 14 de chaque aile 9 de maintien.

Chaque aile 9 de maintien a une lame élastique 23 qui est disposée sur sa face interne avec laquelle elle est perpendiculaire. Lors du montage, c'est-à-dire lors du déplacement dans les trous 3 et 4, les lames élastiques 23 se mettent en contrainte contre l'axe 8.

Après que la tête 7 ait dépassé les trous 3 et 4, les lames élastiques 23 se libèrent et viennent se situer parallèlement à l'axe 8. Les lames élastiques 23 viennent alors se centrer dans le trou 4 de l'élément 2 au moyen d'un bossage extérieur 25.

L'axe 8 est muni de crans 26 situés face à face, qui coopèrent avec un ou plusieurs ensembles de deux crans 27 disposés également face à face dans l'entretoise d'appui 6.

**Revendications**

1. Dispositif d'attache de deux éléments (1) et (2) comportant l'un et l'autre un trou (3) et (4) de passage qui est aligné avec l'autre, caractérisé en ce qu'il comporte d'une part un pion (5) constitué d'une tête (7) et d'un axe (8) muni d'au moins deux ailes (9) de maintien qui s'articulent sur une collerette (10) de façon à pouvoir s'ouvrir autour de celle-ci contre la face extérieure (2) du second élément après l'introduction et le passage de la tête au travers du premier puis du second trou (3, 4) et son dépassement à l'extérieur du second trou, et d'autre part une entretoise d'appui (6) coopérant avec le pion (5) en pénétrant dans un premier temps dans l'axe (8) puis en s'introduisant dans le trou (3) de l'élément (1) pour venir bloquer l'ensemble au moyen d'une extrémité de fermeture (12) sur l'axe (8).

2. Dispositif d'attache selon la revendication 1 caractérisé en ce que l'extrémité de fermeture (12) est obtenue par évasement de l'axe (8) au moyen d'un outillage approprié.

3. Dispositif d'attache selon la revendication 1 caractérisé en ce que l'extrémité de fermeture (12) est constituée par une rondelle avec une empreinte de blocage.

4. Dispositif d'attache selon la revendication 1 caractérisé en ce que la tête (7) a une forme tronconique avec une extrémité arrondie, de manière à faciliter son introduction.

5. Dispositif d'attache selon la revendication 1 caractérisé en ce que la collerette (10) a une face de blocage (13), qui fait un angle aigu par rapport à l'axe (8) et qui coopère avec la forme conjuguée de l'extrémité interne de chaque aile (9) de maintien.

6. Dispositif d'attache selon la revendication 1, caractérisé en ce que chaque aile (9) de maintien a une protubérance (15) en forme d'arc de cercle pour venir se centrer dans le trou (4) de l'élément (2).

7. Dispositif d'attache selon la revendication 1, caractérisé en ce que chaque aile (9) de maintien a un arrondi (16) sur l'extrémité externe afin de faciliter le glissement desdites ailes (9) contre la face inférieure (11) de l'élément (2) lors de l'ouverture.

8. Dispositif d'attache selon la revendication 1, caractérisé en ce que l'entretoise d'appui (6) a une forme tronconique pour réaliser l'autocentrage dans le trou (3) de l'élément (1) correspondant.

9. Dispositif d'attache selon la revendication 1, caractérisé en ce que la collerette (10) a une face de blocage (21) disposée autour de l'axe (8) et faisant un angle droit par rapport audit axe (8), ladite face de blocage (21) coopérant avec une forme conjuguée (22) de l'extrémité interne (14) de chaque aile (9) de maintien.

10. Dispositif d'attache selon la revendication 9, caractérisé en ce que chaque aile (9) de maintien est munie d'une lame élastique (23) perpendiculaire à sa face interne, rabattue en contrainte vers l'axe (8) lors de l'introduction et du passage de la tête (7) dans les trous (3) et (4), puis libérée après le dépassement de la tête à l'extérieur du trou (4) de façon à pouvoir se placer parallèlement à l'axe (8) et à se centrer dans ce trou (4) au moyen d'un bossage extérieur (25).

11. Dispositif d'attache selon la revendication 9 caractérisé en ce que l'axe (8) est muni de crans (26) et en ce que l'entretoise d'appui (6) présente au moins un ensemble de deux crans (26) disposés face à face

dans celle-ci et coopérant avec les crans (26) de l'axe (7).

**Patentansprüche**

1. Verbindungsvorrichtung für zwei Elemente (1 und 2), deren jedes mit einer Durchlaßöffnung (3 und 4) versehen ist, die zueinander ausgerichtet sind, gekennzeichnet durch einerseits einen Bolzen (5), der aus einem Kopfteil (7) und einer Achse (8) besteht, die mit wenigstens zwei Halteflächen (9) versehen ist, welche an einem Ringflansch (10) derart angelenkt sind, daß sie um diesen herum verschwenkbar sind in Richtung zur Außenfläche (2) des zweiten Elementes nach dem Einführen und dem Eingreifen des Kopfteils durch die beiden Öffnungen (3, 4) hindurch, bis es aus der zweiten Öffnung herausragt und, andererseits, ein Stützteil (6), das mit dem Bolzen (5) zusammenwirkt und zuerst in die Achse (8) eindringt und danach in die Öffnung (3) des Elements (1) gleitet, um so die Anordnung mittels eines Verschlußteils (12) an der Achse (8) festzustellen.

2. Verbindungsvorrichtung nach Anspruch 1, dadurch gekennzeichnet, daß das Verschlußteil (12) durch Aufweiten der Achse (8) mittels eines geeigneten Werkzeugs erhalten wird.

3. Verbindungsvorrichtung nach Anspruch 1, dadurch gekennzeichnet, daß das Verschlußteil (12) aus einer Dichtungsscheibe mit Feststellnut besteht.

4. Verbindugnsvorrichtung nach Anspruch 1, dadurch gekennzeichnet, daß das Kopfteil (7) kegelstumpfförmig ist und ein abgerundetes Ende aufweist zur Erleichterung seines Einführens.

5. Verbindungsvorrichtung nach Anspruch 1, dadurch gekennzeichnet, daß der Ringflansch (10) eine Blockierfläche (13) aufweist, die mit der Achse (8) einen spitzen Winkel bildet und die mit der angepaßten Form des inneren Endes einer jeden Haltefläche (9) zusammenwirkt.

6. Verbindungsvorrichtung nach Anspruch 1, dadurch gekennzeichnet, daß jede Haltefläche (9) einen kreisbogenförmigen Vorsprung (15) aufweist, um sich dergestalt in der Öffnung (4) des Elements (2) zu zentrieren.

7. Verbindungsvorrichtung nach Anspruch 1, dadurch gekennzeichnet, daß jede Haltefläche (9) ein Halbrund (16) am äußeren Ende aufweist, um die Gleitfähigkeit der Haltefläche (9) an der Innenwand (11) des Elements (2) während des Öffnens zu erleichtern.

8. Verbindungsvorrichtung nach Anspruch 1, dadurch gekennzeichnet, daß das Stützteil (6) kegelstumpfförmig ist um die Selbstzentrierung in der entsprechenden Öffnung (3) des Elements (1) zu ermöglichen.

9. Verbindungsvorrichtung nach Anspruch 1, dadurch gekennzeichnet, daß der Ringflansch (10) eine Blockierfläche (21) aufweist, welche die Achse (8) umgibt und einen rechten Winkel bezüglich der Achse (8) einschließt, wobei die Zentrierfläche (21) mit der angepaßten Form (22) des inneren Endes (14) einer jeden Haltefläche (9) zusammenwirkt.

10. Verbindungsvorrichtung nach Anspruch 9, dadurch gekennzeichnet, daß jede Haltefläche (9) mit einem elastischen Hebel (23) versehen ist, der sich senkrecht zur Innenwand erstreckt und sich während des Einführens und Durchsetzens des Kopfteils (7) in die Öffnungen (3 und 4) in Richtung zur Achse (18) verbiegt und, nachdem das Kopfteil aus der Öffnung (4) herausragt, freigegeben wird, wonach es sich parallel zur Achse (8) einstellt und sich in der Öffnung (4) mittels eines Außennockens (25) zentriert.

11. Verbindungsvorrichtung nach Anspruch 9, dadurch gekennzeichnet, daß die Achse (8) mit Zacken (26) versehen ist und daß das Stützteil (6) wenigstens eine aus zwei Zacken (26) bestehende Anordnung aufweist, die gegenüberliegend angeordnet sind und mit den Zacken (26) der Achse (7) zusammenwirken.

**Claims**

1. A device for attaching two elements (1) and (2) rich both comprise a through hole (3) and (4) rich are aligned with each other characterised in that it comprises on the one hand a pin member (5) formed by a head (7) and a shank (8) rich is provided with at least two holding limbs (9) rich are pivotally mounted on a collar (10) in such a way that they can open about same against the outside face (2) of the second element after the head has been introduced into and passed through the first and then the second hole (3, 4) and it has projected to the outside of the second hole, and on the other hand a support brace (6) cooperating with the pin member (5) by engaging in a first phase into the shank (8) and then being introduced into the hole (3) in the element (1) to assume a position of locking the assembly by means of a closure end (12) on the shank (8).

2. An attachment device according to claim 1 characterised in that the closure end (12) is produced by enlargement of the shank (8) by means of a suitable tool.

3. An attachment device according to claim 1 characterised in that the closure end (12) is formed by a disc with a locking impression.

4. An attachment device according to claim 1 characterised in that the head (7) is of a frustoconical shape with a rounded end such as to facilitate the introduction thereof.

5. An attachment device according to claim 1 characterised in that the collar (10) has a locking face (13) which forms an acute angle with respect to the shank (8) and rich co-operates with the conjugate shape of the internal end of each holding limb (9).

6. An attachment device according to claim 1 characterised in that each holding limb (9) has a protuberance (15) of arcuate configuration to be centered in the hole (4) in the element (2).

7. An attachment device according to claim 1 characterised in that each holding limb (9) has a rounded portion (16) on the external end in order to facilitate the sliding movement of said limbs (9) against the lower face (11) of the element (2) upon opening of the limbs.

8. An attachment device according to claim 1 characterised in that the support brace (6) is of a frustoconical shape to provide for self-centering in the hole (3) in the corresponding element (1).

9. An attachment device according to claim 1 characterised in that the collar (10) has a locking face (21) rich is disposed around the shank (8) and rich forms a right angle with respect to said shank (8), said locking face (21) co-operating with a conjugate shape (22) of the internal end (14) of each holding limb (9).

10. An attachment device according to claim 9 characterised in that each holding limb (9) is provided with a resilient strip (23) rich is perpendicular to its internal face and rich is folded in a stressed condition towards the shank (8) when the head (7) is introduced into and passed through the holes (3) and (4), and then freed after the head has passed to the exterior of the hole (4) in such a way that it can take up a position parallel to the shank (8) and centre itself in said hole (4) by means of an external boss (25).

11. An attachment device according to claim 9 characterised in that the shank (8) is provided with notches (26) and that the support brace (6) has at least one assembly of two notches (26) disposed face-to-face therein and co-operating with the notches (26) on the shank (8).

FIG.1

FIG.2

FIG.3

# FIG.4

# FIG.5

EP 0 368 723 B1